(19) Europäisches Patentamt
European Patent Office
Office européen des brevets

(11) EP 2 752 802 A1

(12) EUROPEAN PATENT APPLICATION
published in accordance with Art. 153(4) EPC

(43) Date of publication:
09.07.2014 Bulletin 2014/28

(51) Int Cl.:
G06Q 30/02 (2012.01)

(21) Application number: 12856524.9

(86) International application number:
PCT/JP2012/006768

(22) Date of filing: 23.10.2012

(87) International publication number:
WO 2013/084400 (13.06.2013 Gazette 2013/24)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 08.12.2011 JP 2011269362
13.12.2011 JP 2011272743

(71) Applicant: Sony Computer Entertainment Inc.
Tokyo 108-0075 (JP)

(72) Inventors:
• MATSUOKA, Kenji
Tokyo 108-0075 (JP)
• YAMAMOTO, Yoshiteru
Tokyo 108-0075 (JP)
• YOSHIMURA, Masanobu
Tokyo 108-0075 (JP)

(74) Representative: Turner, James Arthur
D Young & Co LLP
120 Holborn
London EC1N 2DY (GB)

(54) STORE PROVISION SYSTEM, PRICE DETERMINATION DEVICE AND PRICE DETERMINATION METHOD

(57) In a store providing system 3, an action history recording device 40 records the action history of a user. A product information acceptor 510 accepts information to identify content to be sold in a store. Here, the product information acceptor 510 accepts the information to identify content included in the action history of the user in the action history recording device 40. A content disposing section 514 disposes accepted information relating to content in the store. A target sales holder 714 holds a target number of sales of content and a content price holder 724 holds the price of the content. A price decider 706 increases the price of the content if the counted number of sales is equal to or larger than the target number of sales, and decreases the price of the content if the counted number of sales is smaller than the target number of sales.

FIG. 2

# Description

[Technical Field]

The present invention relates to a technique for providing virtual stores on a network. Furthermore, the present invention relates to a technique for changing the price of content.

[Background Art]

Conventionally, game software is distributed and sold in the form of a ROM medium such as optical disc or magnetooptical disc. However, in recent years, a system has been prepared in which game devices download game software from a content management server via an Internet line. A user accesses an official store on a network managed by the content providing system and purchases a desired game. This allows the user to immediately play the game without going to a game shop in the real world.

[Summary]

[Technical Problems]

Hundreds or thousands of games are developed and sold every year. Some of them often enjoy explosive popularity whereas games that fall into obscurity without being well known to users also exist. Users have a wide variety of preferences and possibly a game much preferred by a user having a certain particular preference exists even among the games buried in obscurity. Although the official store has a configuration that allows users to easily seek new games, popular games, and so forth, it is not easy for users to seek games matching their own preferences in the official store and this is more so in the case of old, unpopular games. Therefore, it is required to prepare an environment that allows focusing of renewed attention on games buried in obscurity among a lot of games.

When a user determines whether or not to purchase game software, the price of the game software has a large influence on this determination. Therefore, developers (game manufacturers) and publishers set the price of game software carefully whereas it is not necessarily easy to anticipate the number of future sales. If the price is set high, possibly the anticipated number of sales is not attained. On the other hand, if the price is set low, possibly the profit falls short of expectations although the anticipated number of sales is attained. Thus, as one option relating to price setting, the appearance of a nonconventional concept for efficiently distributing game software is expected.

Therefore, an object of the present invention is to provide a technique for efficiently distributing game software.

[Solution to Problems]

In order to solve the above-described problems, a store providing system of a certain aspect of the present invention provides a virtual store operated by a user. The store providing system includes a recording section that records an action history of the user, a product information acceptor that accepts information to identify content to be sold in the store, and a content disposing section that disposes information relating to accepted content in the store. The recording section records information on content purchased by the user or information on content utilized by the user as the action history of the user, and the product information acceptor accepts information to identify content included in the action history of the user in the recording section.

A price deciding device of another aspect of the present invention includes a first holding section that holds a target number of sales of content, a second holding section that holds a price of the content, a counting section that counts the number of sales of the content, and a price decider that decides the price of the content. The price decider increases the price of the content if the counted number of sales is equal to or larger than the target number of sales.

A price deciding method of another aspect of the present invention includes a step of holding a target number of sales of content, a step of holding a price of the content, a step of counting the number of sales of the content, and a step of deciding the price of the content. In the price deciding step, the price of the content is increased if the counted number of sales is equal to or larger than the target number of sales.

What are obtained by translating arbitrary combinations of the above-described constituent elements and expressions of the present invention among method, device, system, recording medium, computer program, and so forth are also effective as aspects of the present invention.

[Advantageous Effect of Invention]

According to the present invention, it becomes possible to provide a technique for efficiently distributing game software.

[Brief Description of Drawings]

[FIG. 1]

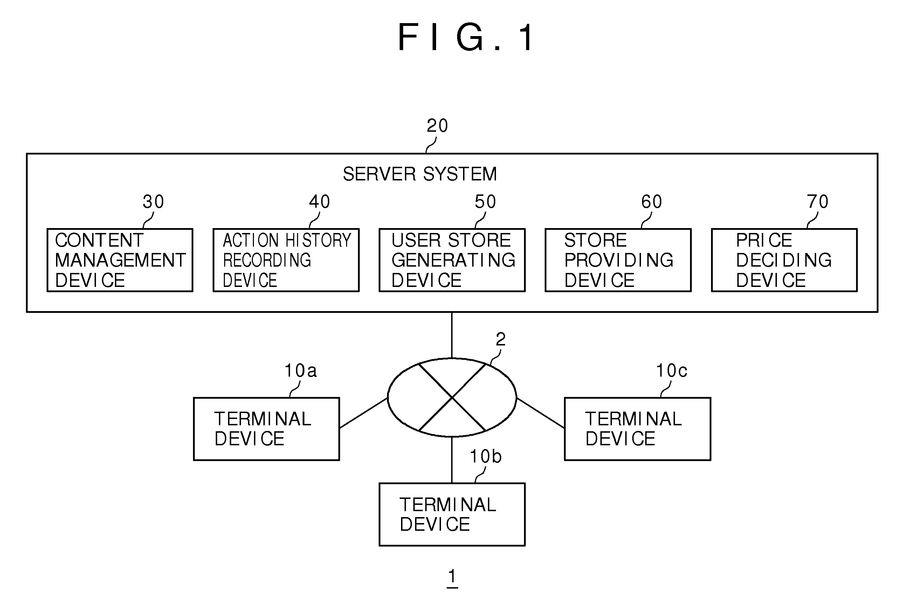

FIG. 1 is a diagram showing a content providing system according to an embodiment of the present invention.
[FIG. 2]

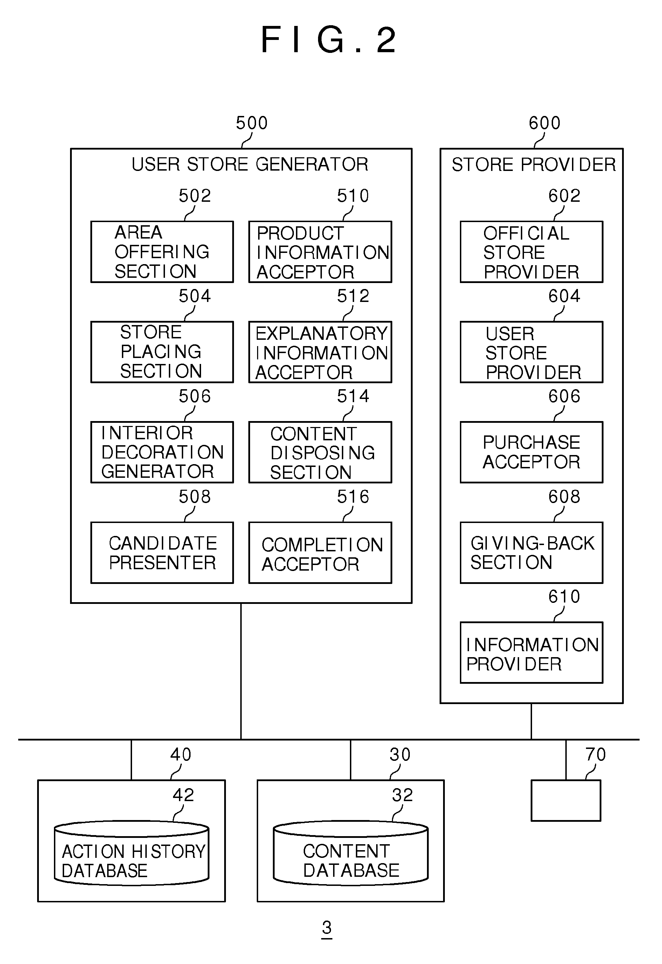

FIG. 2 is a diagram showing a store providing system of the present embodiment.
[FIG. 3]

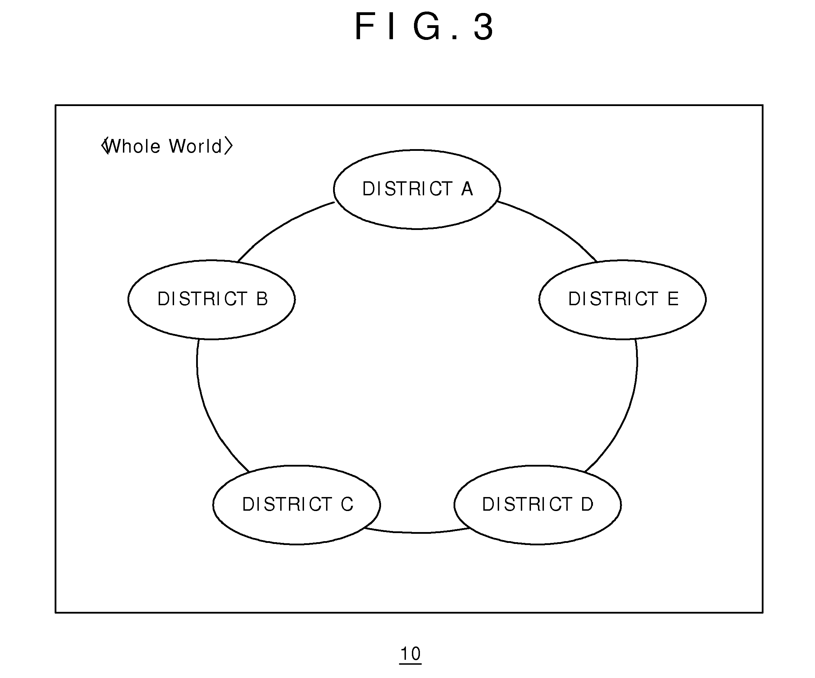

FIG. 3 is a diagram showing the world view of user stores.

[FIG. 4]

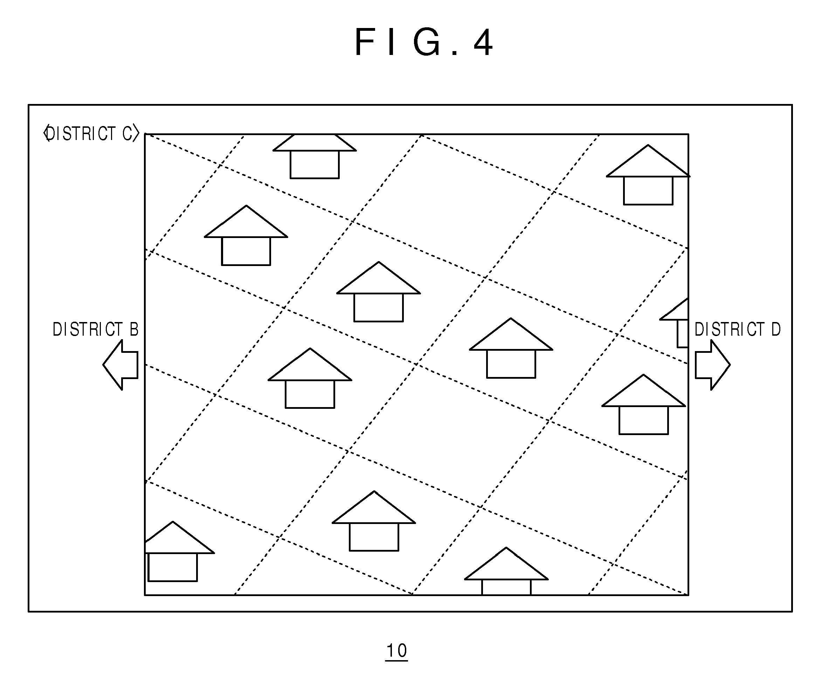

FIG. 4 is a diagram showing the placement state of stores.

[FIG. 5]

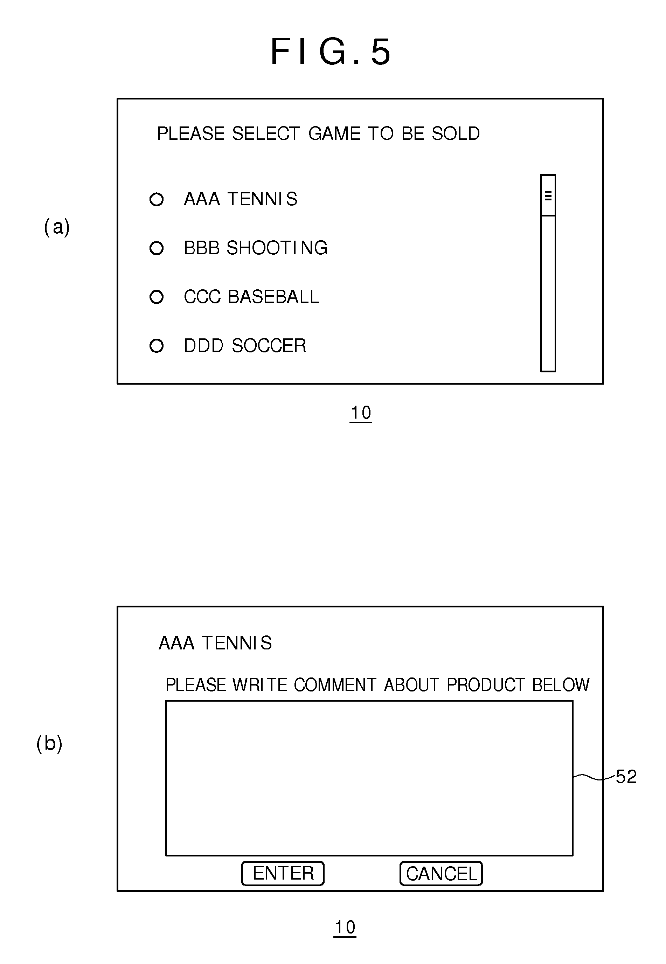

FIG. 5(a) is a diagram showing a list of content available for sale, and FIG. 5(b) is a diagram showing a comment field.

[FIG. 6]

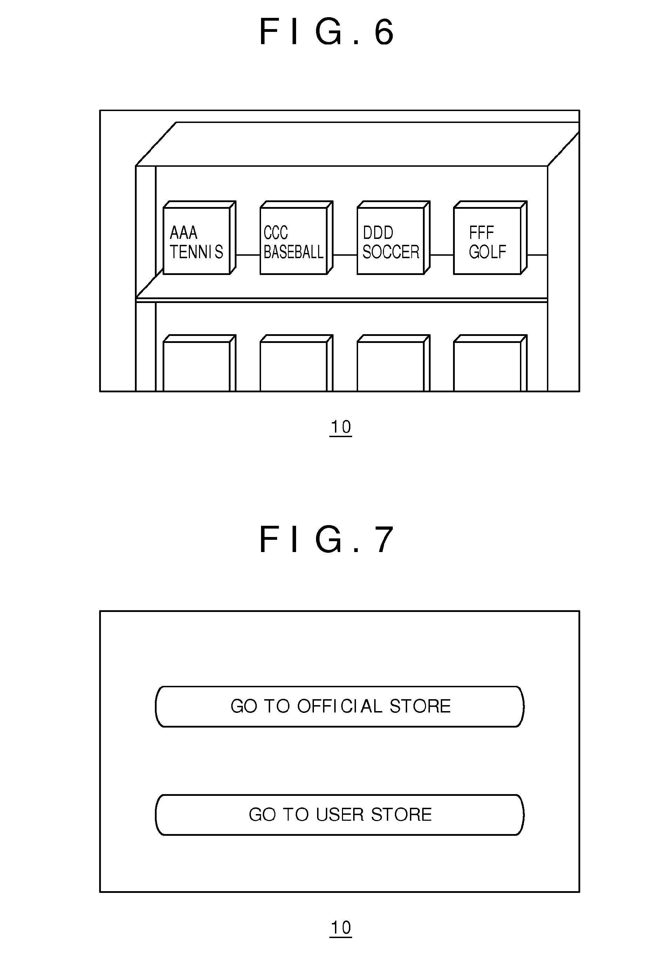

FIG. 6 is a diagram showing one example of the user store.

[FIG. 7]

FIG. 7 is a diagram showing a store selection screen.

[FIG. 8]

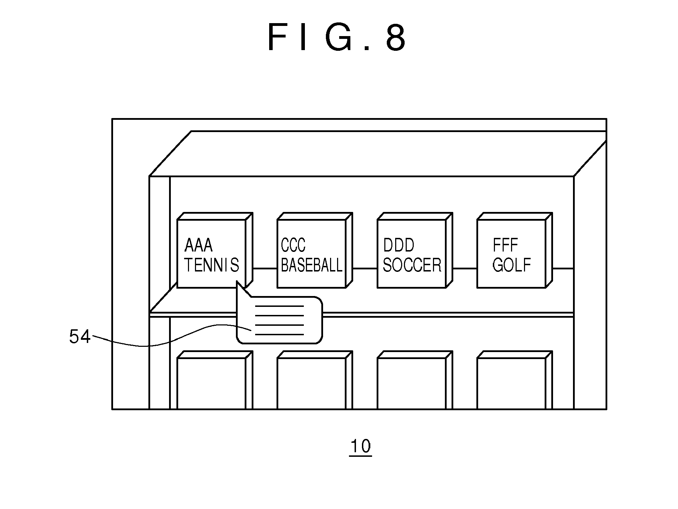

FIG. 8 is a diagram showing a displayed comment field.

[FIG. 9]

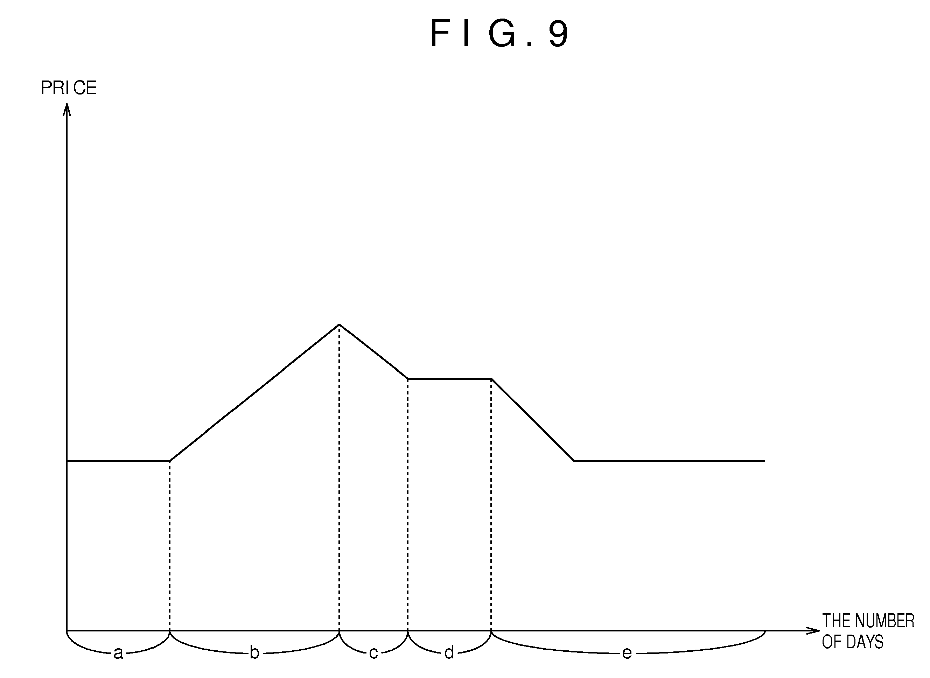

FIG. 9 is a diagram showing one example of the transition of the price when a mechanism of price variation is introduced.

[FIG. 10]

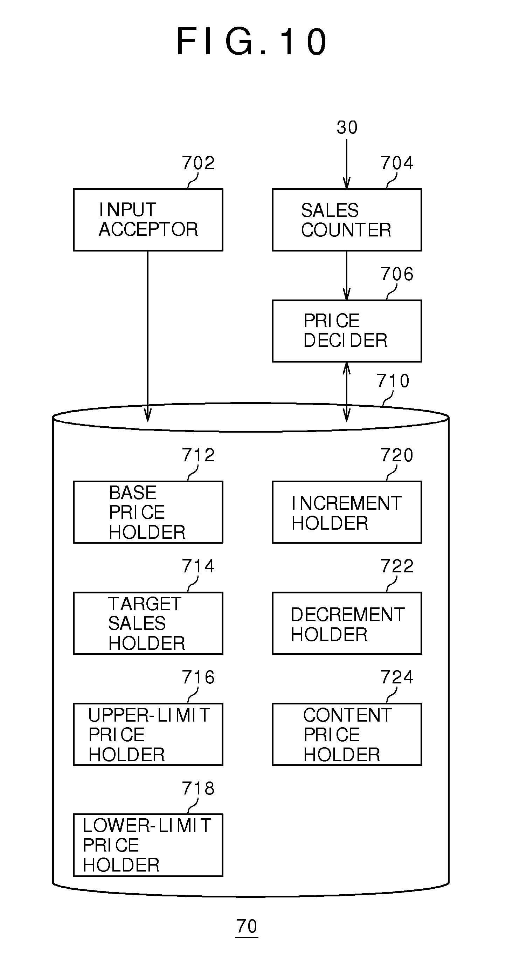

FIG. 10 is a diagram showing the configuration of a price deciding device.

[FIG. 11]

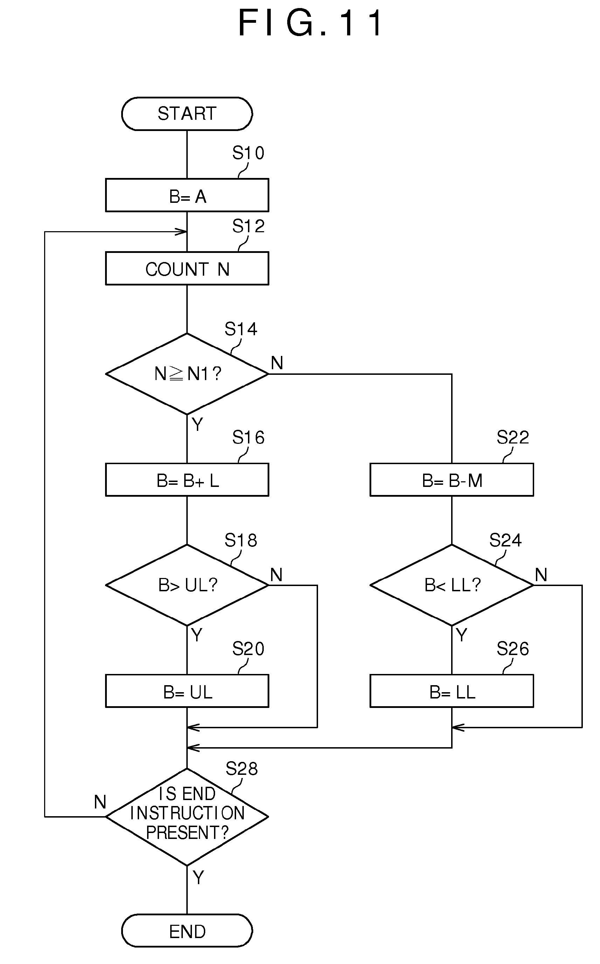

FIG. 11 is a diagram showing a flowchart of decision processing of the content price.

[Description of Embodiment]

An embodiment of the present invention proposes a system for efficiently distributing content. In this content providing system, as a premise, a server that manages plural pieces of content is provided and the pieces of content managed by the server are sold by an online store. In the embodiment, the content is game software. However, it may be digital content of music, movie, etc. Furthermore, the content is not limited to digital content and may be book, DVD, etc. In the content providing system, two kinds of online stores are prepared and users can purchase content from either online store.

One of the online stores is a so-called official store managed by the operating body of the system and terminal devices of users can access the official store via an Internet line and download content. Thousands or tens of thousands of pieces of content are on sale in the official store and users purchase desired content from them.

The other online store is offered by a user. Specifically, in the content providing system of the present embodiment, the user is a main entity of purchase of content and can serve also as a main entity of selling of content. Note that all users do not need to open the store and definitely desiring users serve as main entities of selling of content. The user can select one or plural pieces of content among the pieces of content managed by the server as products and sell them on the user's own shop (user store). Note that the user does not buy content from the system operating body and sell it but definitely is in charge of a selling window of the content managed by the server. The system has a mechanism in which a fee is paid to the owner of a user store when another user who visits the user store (hereinafter, referred to also as "visiting user") purchases content from the user store. Therefore, the owner of the user store participates in this system as a so-called affiliate.

If a game title to be purchased now is known, a user can easily purchase the game by searching for the game title in the official store. In this manner, normally a user who has settled the game to be purchased utilizes the official store to purchase the game. However, non-famous content is not known to users in the first place. Thus, there are few opportunities for it to be sought in the official store and therefore the possibility that it is buried in obscurity in a lot of games is high.

On the other hand, in the user store, each user lines up game titles from the user's unique perspective. For example, a user who likes shooting games sells, in the store, shooting games thought to be entertaining by the user and, in this selling, adds also comments about the games to make an appeal about the amusingness of the games. In the user store, the added comment of the game is a so-called sales pitch for enhancing the buying motive of a user who visits this store. The visiting user reads the comment to thereby come to know the existence of an interesting game for the first time.

When this mechanism is seen through store owner's eyes, the following can be said. Normally, famous games are purchased from the official store in many cases. Therefore, even when only famous games are lined up, the possibility that a visiting user purchases a game from the user store is not high. Therefore, the store owner lines up rare, entertaining games to make an appeal about the originality of the store. Because sale of products in the user store gives profit back to the store owner, the store owner makes efforts to increase the number of visiting users through focusing on the selection of products and creation of attractive comments. As above, in the present system, by allowing establishment of the user stores, the chance to allow focusing of renewed attention on games buried in obscurity thus far is autonomously enhanced and an environment preferable also for developers and publishers can be realized.

Furthermore, in order to efficiently distribute content, the present system provides a mechanism to vary the price of content depending on the sales condition. The price of content is periodically changed based on the number of past sales, and may be changed every day based on the number of sales of the previous day for example. In general, the price of content is decided by a developer or publisher and is not changed basically once decided. In the case of fixed pricing, content does not sell well when the originally set price is too high, and content sells well but the profit is small when the price is too low. Therefore, differently from the conventional fixed pricing, the present system introduces a mechanism to vary the content price according to the sales condition from the start to thereby dynamically set the fair price according to the market principle and promote distribution of the content.

FIG. 1 shows a content providing system 1 according to an embodiment of the present invention. The content providing system 1 includes plural terminal devices 10a, 10b, and 10c (hereinafter, referred to as "terminal device 10" when collectively mentioned) and a server system 20. The terminal devices 10 and the server system 20 are connected via a network 2 such as the Internet.

The terminal device 10 is an information processing device operated by a user. The terminal device 10 can purchase and download content from a store provided by the server system 20 and can generate a user store in the server system 20. In the present embodiment, the terminal device 10 is a game device having a game execution function. However, it may be a personal computer or a smartphone and may be of either a stationary type or a portable type.

The server system 20 includes a content management device 30, an action history recording device 40, a user store generating device 50, a store providing device 60, and a price deciding device 70. The server system 20 may be formed of one server and may be formed of plural servers. The user has a network account and the terminal device 10 accesses the server system 20 by using the network account.

The content management device 30 holds plural pieces of content and manages them in a content database. The action history recording device 40 records the action history of the user who accesses the server system 20. The action history recording device 40 records e.g. game titles purchased by the user, the play times of games, achievements by play, information on how far games have been played (e.g. the number of stages), and so forth in association with the network account of the user.

The user store generating device 50 generates a user store operated by the user. Specifically, the user registers information for generating the user's own store in the user store generating device 50 in accordance with a procedure provided by the user store generating device 50. The information registered in the user store generating device 50 is transmitted to the store providing device 60. The store providing device 60 develops an official store managed by the operating body of the server system 20 on the network and also develops the user stores generated by the user store generating device 50 on the network. In the following, generation and provision processing of the user store will be described.

<Generation and Provision Processing of User Store>

The user store generating device 50 generates the user store operated by a user in a virtual space. In the present embodiment, the user store generating device 50 generates the user store in a two-dimensional virtual space. However, it may generate the user store in a three-dimensional virtual space. The store providing device 60 provides, on the network 2, the user store generated by the user store generating device 50 and accepts purchase requests from other users. When content is purchased via the user store, the store providing device 60 gives back the profit of the content sale to the owner of the user store. In the following, the profit is points that can be used in the content providing system 1 and the points are treated as a virtual currency having value equivalent to money.

FIG. 2 shows a store providing system 3 of the present embodiment. The store providing system 3 is so formed as to include at least a user store generator 500 and a store provider 600. Referring to FIG. 1, the user store generating device 50 realizes a user store generation function by the user store generator 500 and the store providing device 60 realizes a store provision function by the store provider 600. However, either device may realize the user store generation function and the store provision function in the server system 20.

The user store generator 500 has an area offering section 502, a store placing section 504, an interior decoration generator 506, a candidate presenter 508, a product information acceptor 510, an explanatory information acceptor 512, a content disposing section 514, and a completion acceptor 516. Furthermore, the store provider 600 has an official store provider 602, a user store provider 604, a purchase acceptor 606, a giving-back section 608, and an information provider 610. These configurations are realized by a CPU of an arbitrary computer, a memory, a program loaded into the memory, and so forth in terms of hardware components and functional blocks realized by cooperation of them are drawn here. Therefore, it is understood by those skilled in the art that these functional blocks can be realized in various forms by only hardware, only software, or a combination of them.

FIG. 3 shows the world view of the user stores provided by the store providing system 3. In the user store world shown in FIG. 3, the whole world is divided into district A to district E and a user can generate a virtual store in the district of the user's choice. Each district autonomously develops through establishment of stores by users and purchase of content by users who visit the stores. When a user generates a store oriented toward sports games, the user may open the store in a district other than district C if stores oriented toward sports games gather in district C for example. On the other hand, because visiting users seeking sports games gather in district C in such a case, the user may open the store in district C in order to target such visiting users. In this manner, the user to become a store owner determines the location conditions of the store like in the real world to decide the placement site of the store.

FIG. 4 shows the store placement state in district C. Each district is segmented into plural areas and the user can place the store in a vacant area. In the diagram, the area given a house mark indicates that a store has been already established therein and the area not given the house mark indicates that it is a vacant area. The area offering section 502 offers areas in which to place a store to the user. Specifically, it offers, to the user to become a store owner, a GUI of the store world shown in FIG. 3 and a GUI of the district having the areas made by the segmenting shown in FIG. 4 in that order.

The user who opens a store access the user store generating device 50 from the terminal device 10 by using the network account. The store world shown in FIG. 3 is displayed on a display of the terminal device 10. When the user selects any district, the district shown in FIG. 4 is displayed on the display. The user selects a vacant area in which to place a store in the selected district. The terminal device 10 has an input interface such as a pointer and the user performs the selection of a district shown in FIG. 3 and the selection of a vacant area shown in FIG. 4 by using the input interface. At this time, the user selects a district after considering the characteristics of each district. Furthermore, the user selects the area in which to place the store after understanding strong points and weak points of stores of other uses existing in the periphery. The store placing section 504 accepts the selection of district and vacant area and places a user store in the specified vacant area. Through the above, the position of the user store in the virtual space is settled.

Subsequently, the user makes the interior decoration of the store. The interior decoration of the store is an important factor to make an appeal about the taste of the store owner and cause visiting users to intuitively understand the direction of the store. For example, it is preferable that, in a store that sells horror games, its interior decoration also creates an atmosphere of horror. If the atmosphere of the interior decoration matches a visiting user, the visiting user is forced to have expectations also for the selection of games. Therefore, the user to become a store owner will exercise user's ingenuity in making the interior decoration of the store. The interior decoration generator 506 offers, to the user, options of interior decoration elements such as shelf, wallpaper, small articles, and BGM. Through selection of the respective interior decoration elements by the user, the interior decoration generator 506 generates the interior decoration of the store. It is preferable for the interior decoration generator 506 to offer options of interior decoration elements any time in response to a request by the user to enable change of the interior decoration.

After the placement site of the store and the interior decoration of the store are settled, the user specifies content (game) to be sold in the store. At this time, the user is not permitted to sell arbitrary games registered in a content database 32 of the content management device 30 but can sell content purchased by the user itself and/or content used by the user.

The action history recording device 40 accumulates, in an action history database 42, the action history of the user who accesses the server system 20 by using the network account. In the action history database 42, the action history including game titles purchased by the user, the play times of games, prizes in game worlds won by play, etc. is accumulated. The action history recording device 40 monitors the behavior of the terminal device 10 during access to the server system 20 and accumulates the action history in the action history database 42. The terminal device 10 may accumulate the action history of the user and transmit the accumulated action history to the action history recording device 40 to record them in the action history database 42 when accessing the server system 20. It is preferable that the action history in the action history database 42 is updated to the latest state when the terminal device 10 accesses the server system 20 in this manner. Therefore, when specifying content to be sold, the user certainly accesses the server system 20 and thus the latest action history is recorded in the action history database 42 in association with the network account of the user.

The candidate presenter 508 refers to the action history associated with the network account of the user in the action history database 42 and extracts content that the user can sell. Specifically, from the action history of the user, the candidate presenter 508 extracts games purchased by the user in the past and/or games played by the user in the past as content available for sale and presents them to the user in a list format.

FIG. 5(a) shows a list of content available for sale. When the candidate presenter 508 transmits the content list to the terminal device 10, the terminal device 10 displays the content list on the display. When the user selects a game to be sold, a comment field in which to write a comment about the selected game is displayed on the display. FIG. 5(b) shows a comment field 52. When the user inputs a comment and presses an enter button, information for identifying the selected game (e.g. title ID) and the input comment are transmitted to the user store generator 500. The product information acceptor 510 accepts the title ID as information to identify content to be sold in the store and the explanatory information acceptor 512 accepts the input comment as explanatory information of the product.

The product information acceptor 510 accepts the specifying of products by up to the number of pieces of content included in the content list. A limit to the number of games to be sold may be set for the store and the number of games to be sold may be limited to 20 titles for example. Furthermore, a limit to the number of games to be sold may be set depending on the number of games purchased by the store owner in the past. For example, a number that is half the number of games purchased in the past may be set as the upper limit of the number of games to be sold. The content disposing section 514 disposes, in the store, the information relating to content accepted by the product information acceptor 510. Here, the information relating to content is a package image of content. However, it may be the game title. In any case, it is enough that the information disposed in the store is one that allows discrimination from other games when seen by visiting users.

The content disposing section 514 may dispose the information relating to content in the store in the order of acceptance of the title ID by the product information acceptor 510 or may dispose the information in accordance with an instruction from the user. The content disposing section 514 may offer options about the content disposing to the user and may allow the user to arrange the information so that games can be disposed on each game genre basis for example. Upon the completion of the content disposing operation, the terminal device 10 of the user notifies the user store generator 500 of the completion of the store generation processing. When the completion acceptor 516 accepts the completion notification, the store generation processing is completed. The pieces of information input by the user in the above-described procedure, i.e. all pieces of information relating to the configuration of the user store (referred to also as "store configuration information"), are transmitted to the store provider 600 and the user store provider 604 provides the user store on the network 2 based on the store configuration information.

FIG. 6 shows one example of the user store provided by the store provider 600. The store provider 600 receives the store configuration information generated in the user store generator 500 and generates the user store on the network 2. In this store, package images of games for sale are arranged in an aligned manner in a shelf with plural levels. When a visiting user puts a pointer on any package image, a comment input for the game by the store owner is displayed.

In the above, the example in which the content that the user can sell is limited to games purchased by the user in the past and games played in the past is shown. In the store providing system 3, the user may be allowed to sell arbitrary games registered in the content database 32 of the content management device 30. At this time, the candidate presenter 508 extracts all games registered in the content database 32 as content available for sale and presents them to the user. The candidate presenter 508 may present the games to the user with addition of a predetermined mark to games purchased by the user in the past and games played by the user in the past. Such setting may be made that for example the user is inhibited from writing a comment when a game other than games purchased by the user in the past and games played by the user in the past is selected as a game to be sold. In this manner, even when the user can arbitrarily select games, some games can be treated in a different manner among the games for sale by allowing the user to write a comment for a game purchased or played in the past whereas inhibiting the user from writing a comment for a game not purchased or played in the past.

A procedure in which a user visits a store and purchases a product will be shown below. First, the user accesses the server system 20 from the terminal device 10 and specifies whether the user visits the official store or the user store. FIG. 7 shows a store selection screen displayed on the display of the terminal device 10. When the user selects "go to official store," the official store provider 602 provides the official store. In the official store, all pieces of content sold in the content providing system 1 are prepared and the user can purchase arbitrary content.

When the user selects "go to user store," the user store provider 604 provides the user store. First, a district selection screen is displayed on the display. The district selection screen may be a whole image of the user store world shown in FIG. 3. When the user selects any district, a user store selection screen is displayed. The store selection screen may be an image indicating the placement state of stores shown in FIG. 4. Although here a common GUI is used as the GUI in the store generation and the GUI in the store visit, both may be different. When selecting any user store, the user can enter the user store shown in FIG. 6 for example.

In the user store, package images of plural games are arranged. When the user puts a pointer on a package image, a comment input by the store owner about this game title is displayed. The following system may be employed. Specifically, in the user store, a display frame that allows switching of selection of the package image is prepared. The user moves the display frame to the desired package image and thereby a comment is displayed.

FIG. 8 shows a displayed comment field 54. The visiting user can enhance the interest in the game by reading the displayed comment. The visiting user seeks unknown games and the comment by the store owner who has experienced the game is essential information to understand the attractiveness of the game. The visiting user carries out predetermined operation with the terminal device 10 to input a request for purchase of the selected game title. The price of the game may be offered by the price deciding device 70 and displayed near the package image in the store. The purchase request of the game title is transmitted from the terminal device 10 to the store provider 600. In the store providing system 3, content may be purchased directly from the user store. Alternatively, a jump from the user store to a purchase screen of the official store may be made and content may be purchased from this purchase screen.

The purchase acceptor 606 accepts the purchase request of the content together with information on the user store. The information on the user store is information to identify the store in which the visiting user has selected the content (hereinafter, referred to as "store ID"). The store ID may be identification information given by the user store generator 500 and is associated with the network account to identify the owner of the store. The store ID may be the network account itself of the store owner.

When the purchase acceptor 606 accepts the purchase request of the content, the content management device 30 executes billing processing and transmits the content to the terminal device 10. This allows the visiting user to purchase the game and immediately download and play the game.

At this time, the giving-back section 608 provides compensation for the content sale to the user who operates the store identified by the store ID received by the purchase acceptor 606. In the store providing system 3, the compensation is paid in points (virtual currency) and the giving-back section 608 records the given-back compensation in the action history database 42 in association with the network account of the store owner. Although the content management device 30 executes billing processing on the user who purchases content as described above, the giving-back section 608 gives back part of the money collected from the purchasing user to the store owner as compensation (fee). The action history database 42 accumulates the compensation provided by the giving-back section 608 as an action history.

As described above, because the user store world provided by the store providing system 3 forms a pseudo-real world, the sales of the store are affected by various factors such as the location conditions of the store and the selection of products. The information provider 610 performs counting of sales in the user store world, analysis, and so forth and provides various kinds of information to users including store owners. For example, the information provider 610 may create the rankings of sales of user stores and create the rankings of the number of visiting users. Furthermore, the information provider 610 may present, to individual store owners, the sales rank in all store owners and the positive difference or negative difference of sales relative to the average sales.

The information provider 610 may present information relating to the store operation by the user particularly to store owners involving difficulty in increasing sales based on information on the compensation accumulated in the action history database 42. For example, to store owners who are selling sports games mainly, information about in which district of district A to district E sports games are much sold may be presented and information about what tendency exists regarding the genre of stores existing around a store making large sales may be presented. By presenting such information, the information provider 610 can give momentum to cause the store owner to consider relocation of the store or consider change in the selection of products, supporting the autonomous growth of the user store world.

In the user store operation scene, it is anticipated that some store owners frequently maintain the store whereas other store owners are not so. For example, the store placing section 504 may issue a warning to a store owner who does not update the store configuration information for a predetermined period and may forcibly expel the store if the store owner does not perform maintenance nevertheless. At this time, the store placing section 504 may move the store to another vacant area. For example, when a new user attempts to open a store, when showing the placement state of stores shown in FIG. 4, the area offering section 502 may add a predetermined mark to stores not maintained for a predetermined period to inform the user of that a new store can be placed in this area.

In the above, the mechanism to promote distribution of content by providing the user stores in addition to the official store is described. In the following, another mechanism to promote distribution of content by varying the price will be described.

<Price Decision Processing>

The price deciding device 70 periodically varies the price of content based on the number of past sales. For example, the number of sales of the previous day is reflected in the content price of the current day. To put it very simply for understanding, the price rises if content sells and the price drops if content does not sell. According to this mechanism, the content price changes day by day. Therefore, a purchasing user considers at which timing the content should be purchased, which can give a game element to the purchase action itself. Furthermore, from the viewpoint of the owner of the user store, the owner is allowed to have many options in store making, such as selling content that is set at a high price and is popular and selling content that is set at a low price and is unpopular. Thus, the store management can also be given fun such as changing the content placement in the store depending on the content prices. Furthermore, for developers and publishers, there is an advantage that the prices of content automatically become proper values because the prices are set in accordance with the market principle.

FIG. 9 shows one example of the transition of the price when a mechanism of price variation is introduced. The ordinate indicates the price and the abscissa indicates the time (the number of days). The price transition shown in FIG. 9 will be explained.

(a) introduction period
In the early days of the release of content, the content is modestly sold but has not yet become prevalent among users.
(b) popularity increase period
The content starts to gradually get popular by word of mouth, so that the number of sales increases and the price also rises.
(c) adjustment period
Users who hold off purchase increase along with the price increase. Thus, the number of sales decreases and the price also gradually drops.
(d) stable period
Because the price has dropped to some extent, users who held off purchase thus far purchase the content and the price also becomes stable.

(e) decline period

The popularity of the content begins to drop, so that the number of users who purchase it decreases and the price drops.

Note that this price transition is one example and an entirely different price transition is exhibited depending on content.

FIG. 10 shows the configuration of the price deciding device 70. The price deciding device 70 includes an input acceptor 702, a sales counter 704, a price decider 706, and a storage section 710. These configurations are realized by a CPU of an arbitrary computer, a memory, a program loaded into the memory, and so forth in terms of hardware components and functional blocks realized by cooperation of them are drawn here. Therefore, it is understood by those skilled in the art that these functional blocks can be realized in various forms by only hardware, only software, or a combination of them.

The sales counter 704 counts the number of sales of content sold in the content management device 30 for a predetermined period. In the present embodiment, the count period is set to 24 hours from 0 o'clock to 24 o'clock, i.e. the sales counter 704 counts the number of sales in one day. The price decider 706 changes the price of content based on the counted number of sales.

The input acceptor 702 accepts input of parameters used in decision of the content price from a developer or publisher. The accepted parameters are stored in the storage section 710. In the storage section 710, a base price holder 712 holds an input base price. The base price is utilized as an initial setting price at the start of the release. A target sales holder 714 holds an input target number of sales. Although the target number of sales is a target number of sales per one day in the embodiment, it may be e.g. a target number of sales per one week. The target number of sales may be set for each day of the week.

An upper-limit price holder 716 holds an input upper-limit price. The upper-limit price is the upper limit of the selling price of content. The price decider 706 decides a higher price as the number of sales of content increases. Therefore, when the number of sales of content is very large, possibly the price also becomes very high. Thus, the upper-limit price is set to suppress the selling price at the upper-limit price. A lower-limit price holder 718 holds an input lower-limit price. The lower-limit price is the lower limit of the selling price of content. The price decider 706 decides a low price when the number of sales of content becomes small (becomes zero). Therefore, when the number of sales of content becomes zero, the price also drops day by day. Thus, the lower-limit price is set to stop the drop of the selling price at the lower-limit price.

An increment holder 720 holds an input increment of the selling price. A decrement holder 722 holds an input decrement of the selling price. The increment is the amount of price rise used when the price is increased and the decrement is the amount of price drop used when the price is decreased. A content price holder 724 holds the current selling price of content.

The price decider 706 increases the content price if the number of sales counted by the sales counter 704 is equal to or larger than the target number of sales held in the target sales holder 714, and decreases the content price if the counted number of sales is smaller than the target number of sales. A specific example thereof will be shown below.

(Example 1)

In example 1, the price decider 706 decides a price by using the increment held by the increment holder 720 and the decrement held by the decrement holder 722. The increment and the decrement are each a predetermined amount and it is preferable that the increment is set larger than the decrement. In the following, suppose that the base price is A, the content price is B, the target number of sales is N1, the increment is L, and the decrement is M.

The price decider 706 sets the content price B of the first day of the sale to the base price A. The sales counter 704 counts the number N of sales of content in one day and the price decider 706 decides the price of the next day based on the counted number. At this time, if the counted number N of sales is equal to or larger than the target number N1 of sales ($N \geq N1$), the price decider 706 sets the content price to $(B + L)$ and makes the content price holder 724 hold it. Therefore, on the next day, the changed content price is the selling price. On the other hand, if the counted number N of sales is less than the target number N1 of sales ($N < N1$), the price decider 706 sets the content price to $(B - L)$ and makes the content price holder 724 hold it. On the next day, the changed content price is the selling price. In the next day of the sale first day and the subsequent days, the price decider 706 executes the above-described price decision processing by using the content price B held by the content price holder 724.

In example 1, the price decider 706 may decide the price by further using an upper limit UL held by the upper-limit price holder 716 and a lower limit LL held by the lower-limit price holder 718. The price decider 706 sets the content price to the upper limit UL if the content price B derived based on the counted number N surpasses the upper limit UL, and sets the content price B to the lower limit LL if the content price B is less than the lower limit LL.

FIG. 11 shows a flowchart of the decision processing of the content price. At the start of the sale of content, the price decider 706 sets the content price B to the base price A (S10). The sales counter 704 counts the number N of sales of content in one day (S12). After the sales counter 704 counts the number of sales of one day, the price decider 706 compares the number N of sales with the target number N1 of sales held by the target sales holder 714 and decides the content price B of the next day of the count day based on the comparison result.

If the number N of sales is equal to or larger than the target number N1 of sales (Y of S14), the price decider 706 increases the content price B by the increment L held by the increment holder 720 (S16). Subsequently, the price decider 706 determines whether the changed content price B does not surpass the upper limit UL (S18). If the content price B does not surpass it (N of S18), the price decider 706 settles the content price B. On the other hand, if the content price B surpasses it (Y of S18), the price decider 706 sets the content price B to the upper limit UL (S20).

If the number N of sales is less than the target number N1 of sales (N of S14), the price decider 706 decreases the content price B by the decrement M held by the decrement holder 722 (S22). Subsequently, the price decider 706 determines whether the changed content price B is not lower than the lower limit LL (S24). If the content price B is not lower than it (N of S24), the price decider 706 settles the content price B. On the other hand, if the content price B is lower than it (Y of S24), the price decider 706 sets the content price B to the lower limit LL (S26).

The above price decision processing is executed on each day basis if an end instruction of the price decision processing is not present (N of S28). If the end instruction is present (Y of S28), the present flow ends. For example, the end instruction is issued in the case of stopping the selling of content.

In this price decision processing, the increment or the decrement, i.e. a predetermined value, is employed as the amount of change of the price. Therefore, even if the number of sales of each day greatly fluctuates, a price transition without large fluctuation of the content price B can be realized. Furthermore, because the increment is set larger than the decrement, the transition of the content price B with a high degree of rise and a low degree of drop can be realized. Due to this, from the viewpoint of the developer side, a price transition in which the content price B greatly drops in a short period can be avoided.

In example 1, the mechanism is described in which the target number of sales is defined as N1 and the content price rises when the counted number N of sales satisfies $N \geq N1$ and drops when the number N satisfies $N < N1$. Here, a mechanism may be introduced in which two kinds of target numbers N2 and N3 of sales (N2 > N3) are set and the content price rises when the counted number N of sales satisfies $N \geq N2$ and drops when the number N satisfies $N < N3$. In this case, the content price is not changed when the number N satisfies $N3 \leq N < N2$. This allows introduction of a mechanism in which the price of the previous day becomes the price of the current day without change.

(Example 2)

In example 2, the price decider 706 decides the price according to the number N of sales of content. Suppose that the base price is A, the content price is B, the target number of sales is N1, and the counted number N of sales of the previous day is N. Here, when the previous-day price is defined as B1 and the current-day price that should be obtained is defined as B2, the current-day price B2 is obtained by the following expression.

$$B2 = B1 + ((N/N1) - 1) \times A$$

By using this expression, the price decider 706 decides the content price B2 according to the total number of sales from the first day of the sale. As explained also in example 1, if the content price B2 calculated from the expression surpasses the upper limit UL, the price decider 706 may set the content price B2 to the upper limit UL. On the other hand, if the content price B2 is less than the lower limit LL, the price decider 706 may set the content price B2 to the lower limit LL. By setting the content price B2 in the range between the lower limit and the upper limit, the price decider 706 can set the content price B2 in a proper range.

The present invention is described above based on the embodiment. It will be understood by those skilled in the art that this embodiment is exemplification and various modification examples are possible in the combinations of the respective constituent elements and the respective processing processes thereof and such modification examples also fall within the scope of the present invention.

[Reference Signs List]

1 ··· Content providing system, 3 ··· Store providing system, 10 ··· Terminal device, 20 ··· Server system, 30 ··· Content management device, 32 ··· Content database, 40 ··· Action history recording device, 42 ··· Action history database, 50 ··· User store generating device, 52, 54 ··· Comment field, 60 ··· Store providing device, 70 ··· Price deciding device, 500 ··· User store generator, 502 ··· Area offering section, 504 ··· Store placing section, 506 ··· Interior decoration generator, 508 ··· Candidate presenter, 510 ··· Product information acceptor, 512 ··· Explanatory information acceptor, 514 ··· Content disposing section, 516 ··· Completion acceptor, 600 ··· Store provider, 602 ··· Official store provider, 604 ··· User store provider, 606 ··· Purchase acceptor, 608 ··· Giving-back section, 610 ··· Information provider, 702 ··· Input acceptor, 704 ··· Sales counter, 706 ··· Price decider, 710 ··· Storage section, 712 ··· Base price holder, 714 ··· Target sales holder, 716 ··· Upper-limit price holder, 718 ··· Lower-limit price holder, 720 ··· Increment holder, 722 ··· Decrement holder, 724 ··· Content price holder.

[Industrial Applicability]

The present invention relates to a technique for providing virtual stores on a network of application software.

**Claims**

1. A store providing system that provides a virtual store operated by a user, the store providing system comprising:

   a recording section configured to record an action history of the user;
   a product information acceptor configured to accept information to identify content to be sold in the store; and
   a content disposing section configured to dispose information relating to accepted content in the store,
   wherein
   the recording section records information on content purchased by the user or information on content utilized by the user as the action history of the user, and
   the product information acceptor accepts information to identify content included in the action history of the user in the recording section.

2. The store providing system according to claim 1, comprising:

   a purchase acceptor configured to accept a request for purchase of content together with store information; and
   a giving-back section configured to provide compensation for content sale to a user who operates a store identified by the store information.

3. The store providing system according to claim 1 or 2, comprising:

   an area offering section configured to offer an area in which to place the store in a virtual space; and
   a placing section configured to place the store in an area specified by the user.

4. The store providing system according to any of claims 1 to 3,
   wherein
   the recording section records compensation provided to the user, and
   the store providing system includes an information provider configured to present information relating to store operation of the user based on information on recorded compensation.

5. A price deciding device comprising:

   a first holding section configured to hold a target number of sales of content;
   a second holding section configured to hold a price of the content;
   a counting section configured to count the number of sales of the content; and
   a price decider configured to decide the price of the content,
   wherein
   the price decider increases the price of the content if the counted number of sales is equal to or larger than the target number of sales.

6. The price deciding device according to claim 5, wherein
   the price decider decreases the price of the content if the counted number of sales is smaller than the target number of sales.

7. The price deciding device according to claim 5 or 6, further comprising:

   a third holding section configured to hold an upper-limit price of the content,
   wherein
   the price decider changes the price of the content to the upper-limit price if the decided price of the content surpasses the upper-limit price.

8. The price deciding device according to any of claims 5 to 7, further comprising:

   a fourth holding section configured to hold a lower-limit price of the content,
   wherein
   the price decider changes the price of the content to the lower-limit price if the decided price of the content is lower than the lower-limit price.

9. A price deciding method comprising:

   a step of holding a target number of sales of content;
   a step of holding a price of the content;
   a step of counting the number of sales of the content; and
   a step of deciding the price of the content,
   wherein
   in the step of deciding the price, the price of the content is increased if the counted number of sales is equal to or larger than the target number of sales.

10. A program for causing a computer to realize:

    a function to hold a target number of sales of content;
a function to hold a price of the content;
a function to count the number of sales of the content; and
a step of deciding the price of the content, wherein
a function to decide the price includes a function to increase the price of the content if the counted number of sales is equal to or larger than the target number of sales.

11. A computer-readable recording medium in which the program according to claim 10 is recorded.

# F I G . 1

EP 2 752 802 A1

# FIG. 2

500 — **USER STORE GENERATOR**

| 502 AREA OFFERING SECTION | 510 PRODUCT INFORMATION ACCEPTOR |
|---|---|
| 504 STORE PLACING SECTION | 512 EXPLANATORY INFORMATION ACCEPTOR |
| 506 INTERIOR DECORATION GENERATOR | 514 CONTENT DISPOSING SECTION |
| 508 CANDIDATE PRESENTER | 516 COMPLETION ACCEPTOR |

600 — **STORE PROVIDER**

602 OFFICIAL STORE PROVIDER

604 USER STORE PROVIDER

606 PURCHASE ACCEPTOR

608 GIVING-BACK SECTION

610 INFORMATION PROVIDER

40

42 ACTION HISTORY DATABASE

30

32 CONTENT DATABASE

70

3

# FIG. 3

⟨Whole World⟩

DISTRICT A

DISTRICT B

DISTRICT E

DISTRICT C

DISTRICT D

10

# FIG. 4

DISTRICT C

DISTRICT D

DISTRICT B

10

# F I G . 5

(a)

PLEASE SELECT GAME TO BE SOLD

O   AAA TENNIS

O   BBB SHOOTING

O   CCC BASEBALL

O   DDD SOCCER

10

(b)

AAA TENNIS

PLEASE WRITE COMMENT ABOUT PRODUCT BELOW

~52

[ENTER]        [CANCEL]

10

# FIG. 6

10

# FIG. 7

GO TO OFFICIAL STORE

GO TO USER STORE

10

# F I G . 8

AAA
TENNIS

CCC
BASEBALL

DDD
SOCCER

FFF
GOLF

54

10

# F I G . 9

PRICE

THE NUMBER
OF DAYS

a    b    c    d    e

EP 2 752 802 A1

19

# FIG.10

30

702 INPUT ACCEPTOR

704 SALES COUNTER

706 PRICE DECIDER

710

712 BASE PRICE HOLDER

720 INCREMENT HOLDER

714 TARGET SALES HOLDER

722 DECREMENT HOLDER

716 UPPER-LIMIT PRICE HOLDER

724 CONTENT PRICE HOLDER

718 LOWER-LIMIT PRICE HOLDER

70

# F I G . 1 1

START

S10

B= A

S12

COUNT N

S14

N≧N1?  — N →

Y

S16

B= B+ L

S18

B> UL?  — N →

Y

S20

B= UL

S22

B= B-M

S24

B< LL?  — N →

Y

S26

B= LL

S28

IS END INSTRUCTION PRESENT?  — N

Y

END

21

## INTERNATIONAL SEARCH REPORT

| | International application No. |
|---|---|
| | PCT/JP2012/006768 |

### A. CLASSIFICATION OF SUBJECT MATTER
*G06Q30/02*(2012.01)i

According to International Patent Classification (IPC) or to both national classification and IPC

### B. FIELDS SEARCHED

Minimum documentation searched (classification system followed by classification symbols)
G06Q30/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2002-216043 A (Seiko Epson Corp.), 02 August 2002 (02.08.2002), entire text; all drawings (Family: none) | 1-4 |
| A | JP 2001-67418 A (Hitachi, Ltd.), 16 March 2001 (16.03.2001), entire text; all drawings (Family: none) | 1-4 |
| A | JP 2003-76887 A (Hiroshi MATSUURA), 14 March 2003 (14.03.2003), entire text; all drawings (Family: none) | 1-4 |

| ☒ Further documents are listed in the continuation of Box C. | ☐ See patent family annex. |
|---|---|

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 18 December, 2012 (18.12.12) | 08 January, 2013 (08.01.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2012/006768

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2002-245310 A (Leading Information Technology Institute Inc.), 30 August 2002 (30.08.2002), paragraphs [0038] to [0040] & US 2004/34580 A1 | 5-11 |
| Y | JP 2003-303295 A (Nippon Telegraph and Telephone West Corp.), 24 October 2003 (24.10.2003), entire text; all drawings (Family: none) | 5-11 |
| Y | JP 2005-332133 A (NEC Corp.), 02 December 2005 (02.12.2005), paragraphs [0182] to [0184] (Family: none) | 5-11 |

Form PCT/ISA/210 (continuation of second sheet) (July 2009)

**INTERNATIONAL SEARCH REPORT**

International application No.

PCT/JP2012/006768

| Box No. II      Observations where certain claims were found unsearchable (Continuation of item 2 of first sheet) |
|---|

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

| Box No. III      Observations where unity of invention is lacking (Continuation of item 3 of first sheet) |
|---|

This International Searching Authority found multiple inventions in this international application, as follows:

    The technical feature common to the invention of claim 1 and the invention of claim 5 is a system handling "a content".
    However, the above-said technical feature cannot be considered to be a special technical feature, since the technical feature does not make a contribution over the prior art in the light of the contents disclosed in the document 1 (JP 2002-216043 A  (Seiko Epson Corp.), 02 August 2002 (02.08.2002), entire text; all drawings).
    Further, there is no other same or corresponding special technical feature between these inventions.
(Continued to extra sheet)

1. ☒ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**      ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (July 2009)

**INTERNATIONAL SEARCH REPORT**

| International application No. |
| --- |
| PCT/JP2012/006768 |

Continuation of Box No.III of continuation of first sheet(2)

Accordingly, the following two invention groups are involved in claims.
(Invention 1) the inventions of claims 1-4
A providing system for providing a virtual store operated by a user.
(Invention 2) the inventions of claims 5-11
A price determination device for determining a price of a content.

Form PCT/ISA/210 (extra sheet) (July 2009)